# EUROPEAN PATENT SPECIFICATION

(11) **EP 4 625 958 B1**
(45) Date of publication and mention of the grant of the patent: **16.09.2026**
(21) Application number: 24189737.0
(22) Date of filing: 19.07.2024
(51) Int. Cl.: H04N 1/00

(54) **IMAGE DIAGNOSIS SYSTEM, PROGRAM, AND IMAGE DIAGNOSIS METHOD**
BILDDIAGNOSESYSTEM, PROGRAMM UND BILDDIAGNOSEVERFAHREN
SYSTÈME DE DIAGNOSTIC D'IMAGE, PROGRAMME ET PROCÉDÉ DE DIAGNOSTIC D'IMAGE

(30) Priority: 25.03.2024 JP 2024048140
(43) Date of publication of application: 01.10.2025
(73) Proprietor: FUJIFILM Business Innovation Corp., Minato-ku Tokyo (JP)
(72) Inventor: SUZUKI, Mariko, Yokohama-shi, Kanagawa (JP); SUGI, Shinsuke, Yokohama-shi, Kanagawa (JP); MIYAMORI, Shinya, Yokohama-shi, Kanagawa (JP); OKI, Tomoya, Yokohama-shi, Kanagawa (JP); TANAKA, Yuki, Yokohama-shi, Kanagawa (JP)
(74) Representative: Kurig, Thomas

(56) References cited:
- JP-A- 2005 172 902
- JP-A- 2020 155 969
- JP-A- H0 980 987

## Description

### BACKGROUND OF THE INVENTION

### (i) Field of the Invention

The present invention relates to an image diagnosis system, a program, and an image diagnosis method.

### (ii) Description of Related Art

In order to provide a maintenance service that meets a request different for each user, JP2003-43867A discloses a diagnosis apparatus including a receiving section that receives diagnosis information on an image forming apparatus via a predetermined communication line, a generation section that generates a plurality of types of countermeasure methods in accordance with the diagnosis information received by the receiving section, and a transmission section that transmits the plurality of types of countermeasure methods generated by the generation section to an external apparatus capable of communicating with the diagnosis apparatus via the predetermined communication line, as information for displaying a selectable display screen.

In addition, in order to execute a diagnosis operation and an output of a result corresponding to factors such as a skill level of a user, a processing speed, and an operation environment, JP2020-155969A discloses an image processing system including an acquisition unit that acquires abnormality diagnosis information which includes at least a scan image showing a scanned image and is used for an abnormality diagnosis, and a control unit that individually sets, for an evaluation mode selected from a plurality of evaluation modes having sensitivities different from each other with which the abnormality is detected, a threshold value for determining whether or not an abnormality exists in the evaluation mode, calculates a feature amount of an abnormal region detected based on the threshold value in the scan image, and outputs abnormality information based on the calculated feature amount.

Document JP H0980987A describes a system for diagnosing an image forming apparatus wherein a host computer transmits diagnosis result information to the image forming apparatus based on an operator skill level.

### SUMMARY OF THE INVENTION

In general, the diagnosis result in a case where the image forming apparatus is diagnosed is expected to be used by a maintenance engineer of the image forming apparatus. It is difficult for a user other than the maintenance engineer to use this diagnosis result. In addition, the diagnosis result includes technical contents. In general, the user other than the maintenance engineer has difficulty in understanding the contents of this diagnosis result.

On the other hand, in recent years, with the expansion of the deployment region of the image forming apparatus, for example, in a case where the maintenance engineer does not exist at a site, there is a demand for providing a maintenance system that is easy to handle for various users other than the maintenance engineer.

An object of the present invention is to display a diagnosis result of an image forming apparatus corresponding to user information, as compared with a case of displaying the diagnosis result of the image forming apparatus without acquiring the user information. The present invention is defined in the appended claims. The following disclosure serves a better understanding of the present invention.

According to a first aspect of the present disclosure, there is provided an image diagnosis system including: one or a plurality of processors configured to: acquire diagnosis information used for diagnosing an image forming apparatus; acquire user information related to a user who uses the diagnosis from the diagnosis information; and output a diagnosis result for the user based on the acquired diagnosis information and the acquired user information.

According to a second aspect of the present disclosure, in the image diagnosis system according to the first aspect, the user information may be acquired from contract information on the image forming apparatus or login information to the image forming apparatus by the user.

According to a third aspect of the present disclosure, in the image diagnosis system according to the first aspect or the second aspect, the user information may be classification information obtained by classifying the user.

According to a fourth aspect of the present disclosure, in the image diagnosis system according to the first aspect or the third aspect, the user information may be acquired in a case where the user checks the diagnosis result of the image forming apparatus.

According to a fifth aspect of the present disclosure, in the image diagnosis system according to the third aspect or the fourth aspect, the user information may be acquired from login information to another terminal other than the image forming apparatus, which is used in a case where the user checks the diagnosis result of the image forming apparatus.

According to a sixth aspect of the present disclosure, in the image diagnosis system according to the first aspect, the diagnosis information may be acquired by reading a chart in which a diagnosis image is formed, and identification information generated based on the acquired user information may be formed in the chart.

According to a seventh aspect of the present disclosure, in the image diagnosis system according to the sixth aspect, the identification information may be read, and the diagnosis result based on the user information may be output to a terminal accessed by using the identification information.

According to an eighth aspect of the present disclosure, in the image diagnosis system according to any one of the first aspect to the seventh aspect, the diagnosis result may be output such that a display content related to a maintenance inspection for the image forming apparatus is made differently in accordance with the user information.

According to a ninth aspect of the present disclosure, in the image diagnosis system according to the eighth aspect, the display content related to the maintenance inspection may be a display content related to a replacement part and/or a work content of the image forming apparatus.

According to a tenth aspect of the present disclosure, in the image diagnosis system according to the eighth aspect or the ninth aspect, for the display content related to the maintenance inspection, a term used for description may be represented in a different manner.

According to an eleventh aspect of the present invention, in the image diagnosis system according to any one of the first aspect to the tenth aspect, the diagnosis result may be generated to include a knowledge of a maintenance technician who performs maintenance on the image forming apparatus.

According to a twelfth aspect of the present disclosure, in the image diagnosis system according to any one of the first aspect to the eleventh aspect, the diagnosis result may be generated to include at least one knowledge of a maintenance technician of displaying a necessary countermeasure method, deleting an unnecessary countermeasure method, selecting rearrangement by a priority of the countermeasure methods, or a countermeasure method unique to the image forming apparatus.

According to a thirteenth aspect of the present disclosure, there is provided a program causing a computer to realize: a function of acquiring diagnosis information used for diagnosing an image forming apparatus; a function of acquiring user information related to a user who uses the diagnosis from the diagnosis information; and a function of outputting a diagnosis result for the user based on the acquired diagnosis information and the acquired user information.

According to a fourteenth aspect of the present disclosure, there is provided an image diagnosis method including: acquiring diagnosis information used for diagnosing an image forming apparatus; acquiring user information related to a user who uses the diagnosis from the diagnosis information; and outputting a diagnosis result for the user based on the acquired diagnosis information and the acquired user information.

According to the first aspect of the present disclosure, the diagnosis result of the image forming apparatus corresponding to the user information can be displayed as compared with a case where the diagnosis result of the image forming apparatus is displayed without acquiring the user information.

According to the second aspect of the present disclosure, it is possible to acquire the user information based on the image forming apparatus as a diagnosis target.

According to the third aspect of the present disclosure, it is possible to display the diagnosis result of the image forming apparatus corresponding to classification of the user.

According to the fourth aspect of the present disclosure, it is possible to acquire the user information based on the user who checks the diagnosis result.

According to the fifth aspect of the present invention, the user information can be acquired from another terminal different from the image forming apparatus as a diagnosis target.

According to the sixth aspect of the present invention, the diagnosis result of the image forming apparatus can be acquired by using identification information formed on a chart as compared with a case where only the diagnosis image is formed on the chart.

According to the seventh aspect of the present disclosure, the user can reduce the number of operations for checking the diagnosis result as compared with a case where the user accesses a check screen to check the diagnosis result.

According to the eighth aspect of the present disclosure, the display related to the maintenance inspection of the image forming apparatus can be made differently in accordance with the user information as compared with a case where the diagnosis result of the image forming apparatus is displayed without acquiring the user information.

According to the ninth aspect of the present disclosure, the replacement part and/or the work content can be displayed in accordance with the user information as compared with a case where the diagnosis result of the image forming apparatus is displayed without acquiring the user information.

According to the tenth aspect of the present disclosure, the representation of the term used for the description can be made differently in accordance with the user information as compared with a case where the diagnosis result of the image forming apparatus is displayed without acquiring the user information.

According to the eleventh aspect of the present disclosure, it is possible to display the diagnosis result including the knowledge of the maintenance technician who performs the maintenance of the image forming apparatus.

According to the twelfth aspect of the present disclosure, it is possible to display the diagnosis result in which the content examined by the maintenance technician who performs the maintenance on the image forming apparatus is reflected.

According to the thirteenth aspect of the present disclosure, it is possible to cause the computer to realize the function of displaying the diagnosis result of the image forming apparatus corresponding to the user information, as compared with a case of displaying the diagnosis result of the image forming apparatus without acquiring the user information.

According to the fourteenth aspect of the present disclosure, the diagnosis result of the image forming apparatus corresponding to the user information can be displayed as compared with a case where the diagnosis result of the image forming apparatus is displayed without acquiring the user information.

### BRIEF DESCRIPTION OF THE DRAWINGS

Exemplary embodiment(s) of the present invention will be described in detail based on the following figures, wherein:
Fig. 1 is a diagram illustrating an example of the present exemplary embodiment including an image diagnosis system;
Fig. 2 is a diagram illustrating a hardware configuration example of a server apparatus and an information processing unit provided in an image forming apparatus;
Fig. 3 is a diagram illustrating an example of the image forming apparatus;
Fig. 4 is a diagram illustrating an example in which a user is classified according to a level of a maintenance technology of the user;
Figs. 5A and 5B are diagrams illustrating an example of a screen displayed on a display reception unit of the image forming apparatus, Fig. 5A is a diagram illustrating an operation screen of the image forming apparatus, and Fig. 5B is a diagram illustrating a setting screen of the image forming apparatus;
Fig. 6 is a diagram illustrating a login screen of a user terminal;
Fig. 7 is a sequence diagram illustrating a flow until a diagnosis result of the image diagnosis system according to Exemplary Embodiment 1 is output;
Fig. 8 is a sequence diagram illustrating a flow until a diagnosis result of an image diagnosis system according to Exemplary Embodiment 2 is output;
Fig. 9 is a sequence diagram illustrating a flow until a diagnosis result of an image diagnosis system according to Exemplary Embodiment 3 is output;
Fig. 10 is a diagram illustrating an example of chart paper;
Fig. 11 is a diagram illustrating another example of the chart paper;
Fig. 12 is a diagram illustrating an example of a display screen of a diagnosis result output for a maintenance engineer;
Fig. 13 is a diagram illustrating an example of a display screen of a diagnosis result output for a trained user;
Fig. 14 is a diagram illustrating an example of a display screen of a diagnosis result output for a machine management user;
Fig. 15 is a diagram illustrating an example of a display screen of a diagnosis result output for a general user; and
Fig. 16 is a diagram illustrating an example of a display screen of a diagnosis result generated to include a knowledge of the maintenance engineer.

### DETAILED DESCRIPTION OF THE INVENTION

Hereinafter, exemplary embodiments of the present invention will be described in detail with reference to the accompanying drawings.

### <Configuration of Image Diagnosis System>

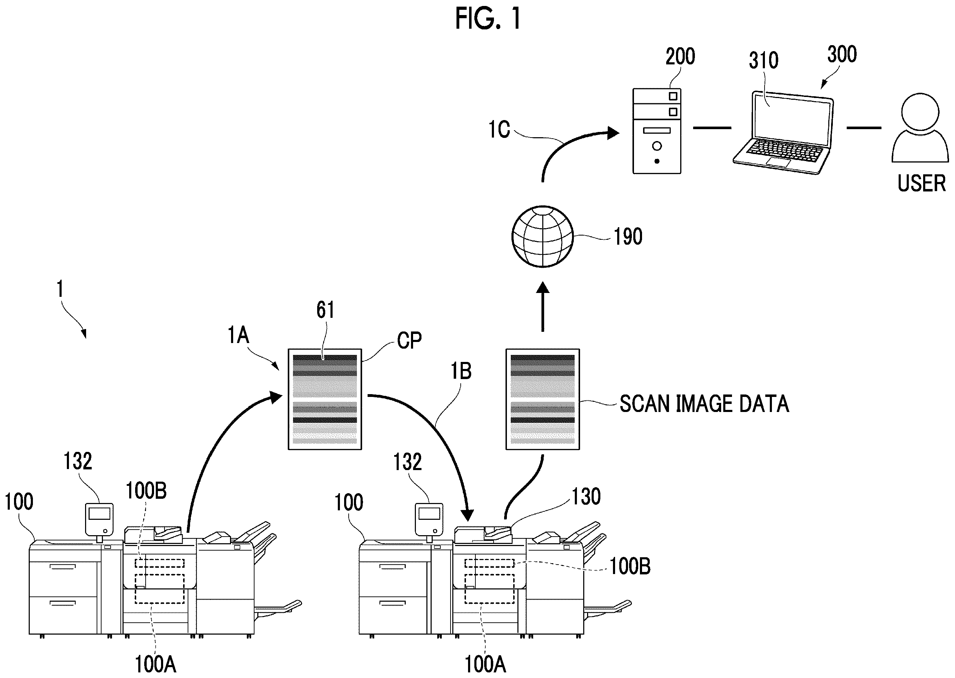

Fig. 1 is a diagram illustrating an example of the present exemplary embodiment including an image diagnosis system 1.

The image diagnosis system 1 according to the present exemplary embodiment is provided with a plurality of image forming apparatuses 100 and a server apparatus 200 that is connected to each of the plurality of image forming apparatuses 100 via a communication line 190. In Fig. 1, two image forming apparatuses 100 among the plurality of image forming apparatuses 100 are displayed. In the present exemplary embodiment, in the server apparatus 200, diagnosis of each of the image forming apparatuses 100 is performed.

Further, the image diagnosis system 1 in the present exemplary embodiment is provided with a user terminal 300 that is connected to the server apparatus 200 and receives an operation from a user. The user terminal 300 is provided with a display device 310. The user terminal 300 is realized by a computer. Examples of a form of the user terminal 300 include a personal computer (PC), a smartphone, a tablet terminal, and the like.

The image forming apparatus 100 is provided with an image forming unit 100A as an example of an image forming section that forms an image on paper which is an example of a recording medium. For example, the formation of an image on paper by the image forming unit 100A is performed by an inkjet method or an electrophotographic method. In addition, the formation of the image on the paper by the image forming unit 100A is not limited to the ink jet method or the electrophotographic method, and may be performed by other methods. The image forming apparatus 100 is further provided with an information processing unit 100B. The information processing unit 100B executes various processes executed in the image forming apparatus 100.

### <Hardware Configuration of Server Apparatus and Information Processing Unit>

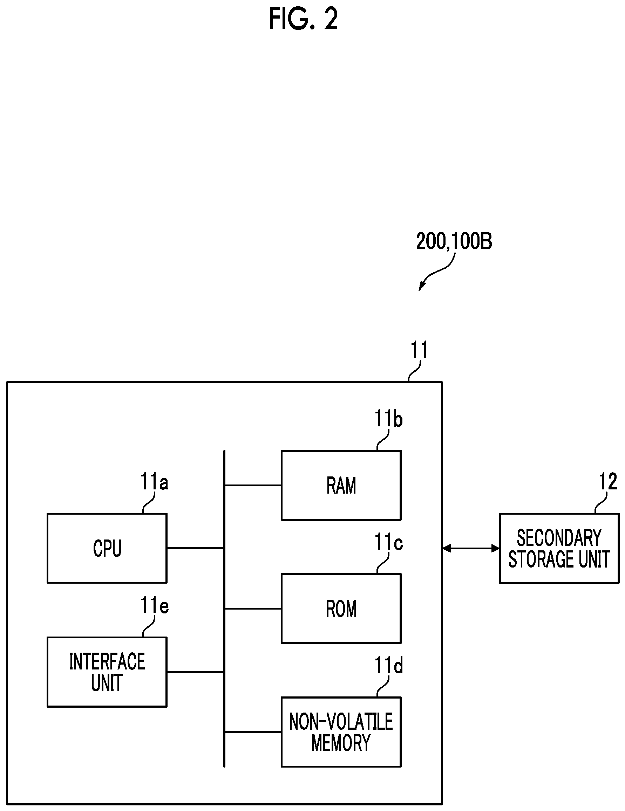

Fig. 2 is a diagram illustrating a hardware configuration example of the server apparatus 200 and the information processing unit 100B provided in the image forming apparatus 100.

The server apparatus 200 and the information processing unit 100B provided in the image forming apparatus 100 are realized by a computer. Each of the server apparatus 200 and the information processing unit 100B includes an arithmetic processing unit 11 that executes a digital arithmetic process according to a program, and a secondary storage unit 12 that stores information. The secondary storage unit 12 is realized, for example, by a known information storage device such as a hard disk drive (HDD), a semiconductor memory, or a magnetic tape.

The arithmetic processing unit 11 is provided with a CPU 11a as an example of a processor. In addition, the arithmetic processing unit 11 is provided with a RAM 11b used as a working memory or the like of the CPU 11a and a ROM 11c in which programs or the like executed by the CPU 11a are stored. Further, the arithmetic processing unit 11 is provided with a non-volatile memory 11d that is configured to be rewritable and can hold data even in a case where power supply is interrupted. In addition, the arithmetic processing unit 11 is provided with an interface unit 11e that controls each unit, such as a communication unit, connected to the arithmetic processing unit 11.

The non-volatile memory 11d is configured with, for example, an SRAM or a flash memory that is backed up by a battery. The secondary storage unit 12 stores the programs executed by the arithmetic processing unit 11 in addition to files and the like. In the present exemplary embodiment, the arithmetic processing unit 11 reads the program stored in the ROM 11c or the secondary storage unit 12 to execute each process.

The program executed by the CPU 11a can be provided to the server apparatus 200 and the information processing unit 100B in a state in which the program is stored in a computer-readable recording medium such as a magnetic recording medium (for example, a magnetic tape or a magnetic disk), an optical recording medium (for example, an optical disk), a magnetooptical recording medium, or a semiconductor memory. Further, the program executed by the CPU 11a may be provided to the server apparatus 200 and the information processing unit 100B by a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among the processes described below is executed by the CPU 11a as an example of the processor provided in the image forming apparatus 100. The process executed by the server apparatus 200 among the processes described below is executed by the CPU 11a as an example of the processor provided in the server apparatus 200. In addition, in the process described below, the server apparatus 200 performs a process for diagnosing the image forming apparatus 100. The process for diagnosing the image forming apparatus 100 may be realized by one apparatus such as one server apparatus 200 or may be realized by a plurality of apparatuses.

### <Image Forming Apparatus>

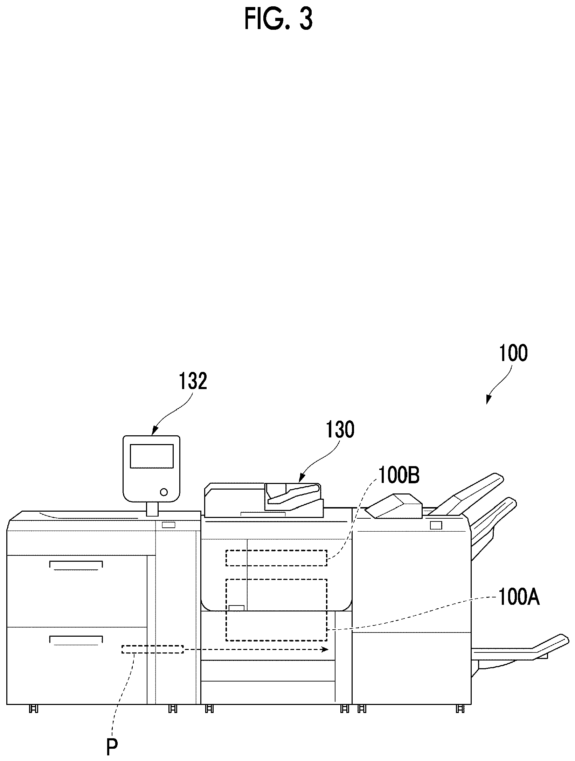

Fig. 3 is a diagram illustrating an example of the image forming apparatus 100.

The image forming apparatus 100 is provided with an image forming unit 100A that forms an image on paper P which is an example of a recording medium. In the present exemplary embodiment, in a case where the paper P passes through the image forming unit 100A, the paper P passes through the image forming unit 100A in a state in which one side of the paper P faces the image forming unit 100A.

Further, the image forming apparatus 100 is provided with an image scanning device 130 as an example of an image scanning section that scans an image formed on a recording medium such as paper. Such an image scanning device 130 is a so-called scanner having a function of transporting the paper. The image scanning device 130 includes a light source that emits light with which paper is to be irradiated and a light receiving unit such as a CCD that receives reflected light from the paper. In the present exemplary embodiment, scan image data described below is generated based on the reflected light received by the light receiving unit.

A scanning position of an image is set in advance in the image scanning device 130. The image scanning device 130 scans the image located at the scanning position in the paper that is transported in order.

In the example illustrated in Fig. 3, the image scanning device 130 is provided at an upper portion of the image forming apparatus 100. The image scanning device 130 sequentially scans paper (not illustrated) set by the user. An installation mode of the image scanning device 130 is not limited to the mode illustrated in Fig. 3. The image scanning device 130 may be provided inside the image forming apparatus 100 and on a transport path of the paper P. In this case, the paper P on which an image is formed by the image forming unit 100A sequentially passes through the image scanning device 130, and at the time of passing through the paper P, each image of the paper P is scanned in order.

In addition, in scanning an image on paper, the paper may be placed on a platen (not illustrated) configured with plate-shaped glass or the like such that the paper placed on the platen may be scanned.

As indicated by a reference numeral 1C in Fig. 1, the image forming apparatus 100 has an information transmission function of transmitting information to the server apparatus 200. The information transmission function is realized by the interface unit 11e. In the present exemplary embodiment, the image forming apparatus 100 transmits, to the server apparatus 200, classification information that is information obtained by classifying a user as an example of the user information, by using the information transmission function. In addition, the image forming apparatus 100 transmits the scan image data to the server apparatus 200. The user information and the like will be described below.

Further, each image forming apparatus 100 is provided with an operation reception unit 132 that receives an operation from the user. The operation reception unit 132 is configured with a so-called touch panel. The operation reception unit 132 displays information for the user and receives an operation performed by the user. The display of information for the user and the reception of the operation by the user are not limited to being performed by one operation reception unit 132 as in the present exemplary embodiment. The operation reception unit and the information display unit may be provided separately.

### <Outline of Diagnosis on Image Forming Apparatus>

Next, an outline of diagnosis on the image forming apparatus 100 will be described with reference to Fig. 1.

In a case of diagnosing the image forming apparatus 100, first, the image forming unit 100A is operated to form a chart image 61 on paper which is an example of a recording medium. Thus, as illustrated by a reference numeral 1A, chart paper CP which is paper on which the chart image 61 is formed is generated. The chart image 61 is an image to be used for diagnosing the image forming apparatus 100.

In a case where the chart paper CP is generated, the chart paper CP is placed on the image scanning device 130 as indicated by a reference numeral 1B in Fig. 1. The image scanning device 130 is used to scan the chart paper CP on which the chart image 61 is formed. Thus, scan image data of the chart image 61, which is an example of diagnosis information, is generated. The chart paper CP may be generated and scanned at the same time inside the image forming apparatus 100 to generate the scan image data of the chart image 61.

As indicated by the reference numeral 1C in Fig. 1, the scan image data is transmitted to the server apparatus 200, and then is stored in the server apparatus 200. The server apparatus 200 diagnoses the image forming apparatus 100 based on the scan image data. A user who performs maintenance of the image forming apparatus 100 accesses the server apparatus 200, and refers to a result of the diagnosis by the server apparatus 200.

In the present exemplary embodiment, a display screen of the result of diagnosing the image forming apparatus 100 is changed in accordance with a level of a maintenance technology of the user who performs the maintenance of the image forming apparatus 100. More specifically, the server apparatus 200 acquires classification information (to be described below), which is information obtained by classifying the user, as information on the user who uses the result of the diagnosis of the image forming apparatus 100. The result of the diagnosis of the image forming apparatus 100 is output based on the acquired information.

### <Process of Server Apparatus>

Next, a process by the server apparatus 200 will be described.

The CPU 11a (see Fig. 2) as an example of the processor provided in the server apparatus 200 analyzes the scan image data transmitted from the image forming apparatus 100, and diagnoses the image forming apparatus 100.

Further, in the present exemplary embodiment, the CPU 11a of the server apparatus 200 acquires user information related to the user who uses the diagnosis result of the image forming apparatus 100. The CPU 11a of the server apparatus 200 diagnoses the image forming apparatus 100, generates a display screen of the diagnosis result by using the acquired user information, and outputs the display screen.

Information on the generated display screen is transmitted, for example, from the server apparatus 200 to the user terminal 300 (see Fig. 1), and is displayed on the display device 310 (see Fig. 1) of the user terminal 300. Thus, the user grasps the diagnosis result of the image forming apparatus 100. The process for the screen is not limited thereto. The information on the screen may be output to a device having a printing function, such as the image forming apparatus 100 (see Fig. 1).

### <User Information>

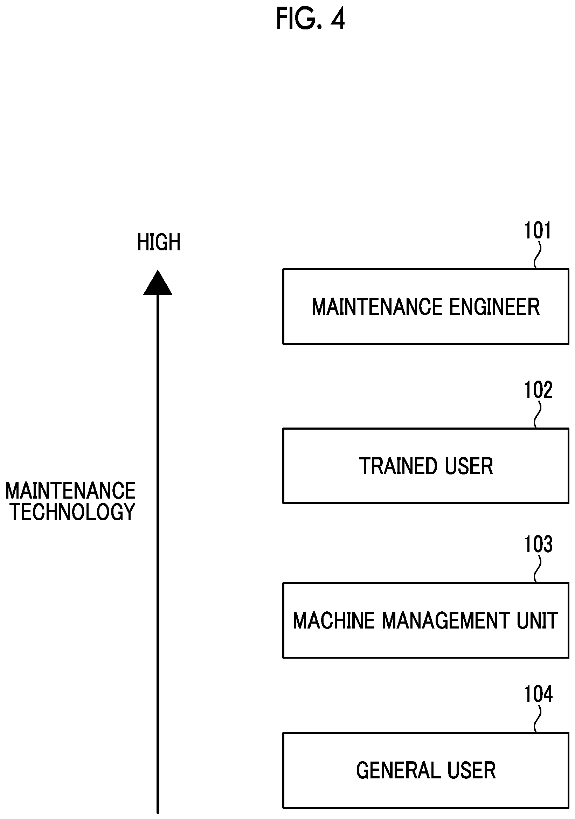

Fig. 4 is a diagram illustrating an example in which a user is classified according to a level of a maintenance technology of the user.

Information on a user who uses a result of diagnosis of the image forming apparatus 100 is represented by, for example, classification information obtained by classifying the user according to the level of the maintenance technology of the user. In the example illustrated in Fig. 4, a maintenance engineer 101, a trained user 102, a machine management user 103, and a general user 104 are illustrated in order of a high maintenance technology of the image forming apparatus 100.

The maintenance engineer 101, which is an example of a maintenance technician, is an engineer who can perform all maintenance of the image forming apparatus 100. The trained user 102 is a user who can perform the maintenance of the image forming apparatus 100 up to quality adjustment and replacement of parts of the image forming apparatus 100, except for work that can be executed only by the maintenance engineer. The machine management user 103 is a user who can perform the maintenance of the image forming apparatus 100 up to the image quality adjustment. The general user 104 is a user who cannot perform all the maintenance on the image forming apparatuses 100. The classification described above is an example, and is not limited thereto.

### <Method of Acquiring User Information>

A plurality of methods can be considered for a method of acquiring user information. For example, in a case of introducing the image forming apparatus 100, a method of storing contract information on a user who has made a purchase contract or the like in the image forming apparatus 100 can be considered. Thus, in a case of diagnosing the image forming apparatus 100, the server apparatus 200 can acquire the user information by referring to the contract information on the image forming apparatus 100.

For example, in a case where the user who has made the purchase contract or the like of the image forming apparatus 100 is the trained user 102, user information specified from the contract information on the image forming apparatus 100 is the trained user 102. In addition, in a case where the user who has made the purchase contract or the like is the machine management user 103, a user specified from the contract information on the image forming apparatus 100 is the machine management user 103. In addition, in a case where the user who has made the purchase contract or the like is the general user 104, a user specified from the contract information on the image forming apparatus 100 is the general user 104. In addition, in a case where the user who has made the purchase contract or the like is the maintenance engineer 101, user information specified from the contract information on the image forming apparatus 100 is the maintenance engineer 101.

In this method, one piece of user information is assigned to one image forming apparatus 100. In a case of diagnosing the image forming apparatus 100, user information is specified based on the contract information on the image forming apparatus 100, and the specified user information is transmitted to the server apparatus 200.

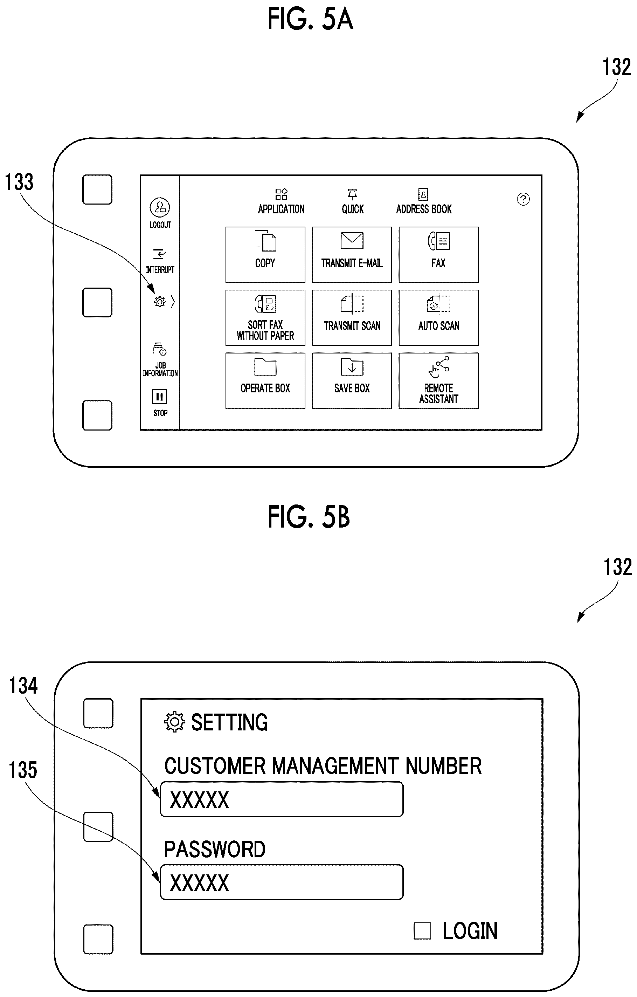

Figs. 5A and 5B are diagrams illustrating an example of a screen displayed on the operation reception unit 132 of the image forming apparatus 100, Fig. 5A is a diagram illustrating an operation screen of the image forming apparatus 100, and Fig. 5B is a diagram illustrating a setting screen of the image forming apparatus 100.

As a method different from the above, a method of acquiring user information from login information to the image forming apparatus 100 is also considered. Fig. 5A illustrates an operation screen of the image forming apparatus 100. This operation screen corresponds to the operation reception unit 132 (refer to Fig. 1) of the image forming apparatus 100. In a normal time, a user who uses the image forming apparatus 100 operates the operation screen to perform copying, scanning, or the like.

In a case of diagnosing the image forming apparatus 100, the user presses a setting button 133 illustrated on the operation screen. Thus, a setting screen illustrated in Fig. 5B is displayed. The user can change a login mode by inputting a customer management number and a password into a customer management number field 134 and a password input field 135 on the setting screen. By assigning the user information described above to the customer management number, the user information is specified at a time of login to the image forming apparatus 100.

For example, in a case where the customer management number input in a case of logging in to the image forming apparatus 100 is a number assigned to the trained user 102, the user information is specified as the trained user 102. In addition, in a case where the customer management number input in the login to the image forming apparatus 100 is a number assigned to the machine management user 103, the user information is specified as the machine management user 103. In addition, in a case where the customer management number input in the login to the image forming apparatus 100 is a number assigned to the general user 104, the user information is specified as the general user 104. In addition, the method of specifying the general user 104 is not limited to this, and the general user 104 is specified even in a case where the general user 104 does not log in to the image forming apparatus 100. In addition, the management number of the maintenance engineer is managed separately from the customer management number, and in a case where the management number input in a case of logging in to the image forming apparatus 100 is a number assigned to the maintenance engineer 101, the user information is specified as the maintenance engineer 101.

In this method, the user information is specified based on the login information to the image forming apparatus 100. In a case of diagnosing the image forming apparatus 100, the user information specified based on the login information is transmitted to the server apparatus 200.

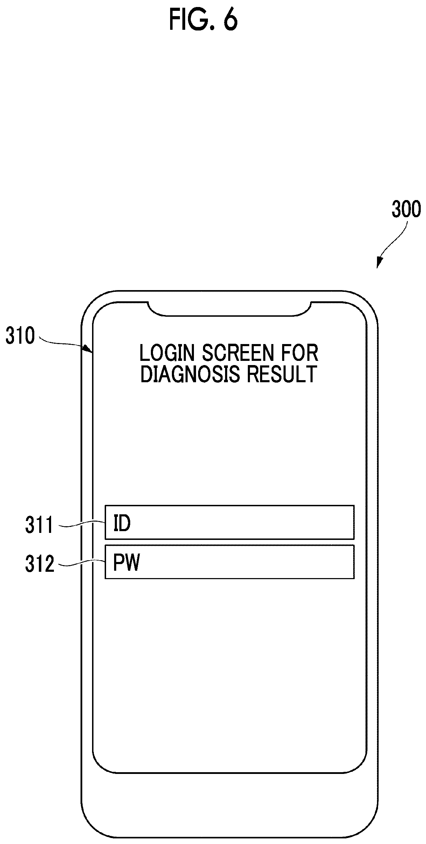

Fig. 6 is a diagram illustrating a login screen of the user terminal 300.

User information can also be acquired from the user terminal 300. In a case where a user checks a diagnosis result, the user accesses a screen for checking the diagnosis result using the user terminal 300 and logs in. Here, the user information is acquired based on login information from the user terminal 300.

Fig. 6 illustrates a login operation screen of a smartphone as an example of the user terminal 300. This operation screen corresponds to the display device 310 (see Fig. 1). The user inputs a user ID and a password into a user ID field 311 and a password input field 312 on the operation screen. Thus, the user can log in to the screen for checking a diagnosis result provided by the server apparatus 200. By assigning user information to the user ID, the user information is specified in a case of login from the user terminal 300. The specified user information is transmitted to the server apparatus 200.

For example, in a case where the user ID input from the user terminal 300 at a time of login is an ID assigned to the trained user 102, the user information is specified as the trained user 102. In addition, in a case where the user ID input from the user terminal 300 at the time of login is an ID assigned to the machine management user 103, the user information is specified as the machine management user 103. In addition, in a case where the user ID input from the user terminal 300 at the time of login is an ID assigned to the general user 104, the user information is specified as the general user 104. In addition, in a case where the user ID input from the user terminal 300 at the time of login is an ID assigned to the maintenance engineer 101, the user information is specified as the maintenance engineer 101.

In this method, the user information is specified based on the login information from the user terminal 300. In a case where the image forming apparatus 100 is diagnosed, the user information specified based on the login information from the user terminal 300 is transmitted to the server apparatus 200.

### <Exemplary Embodiment 1>

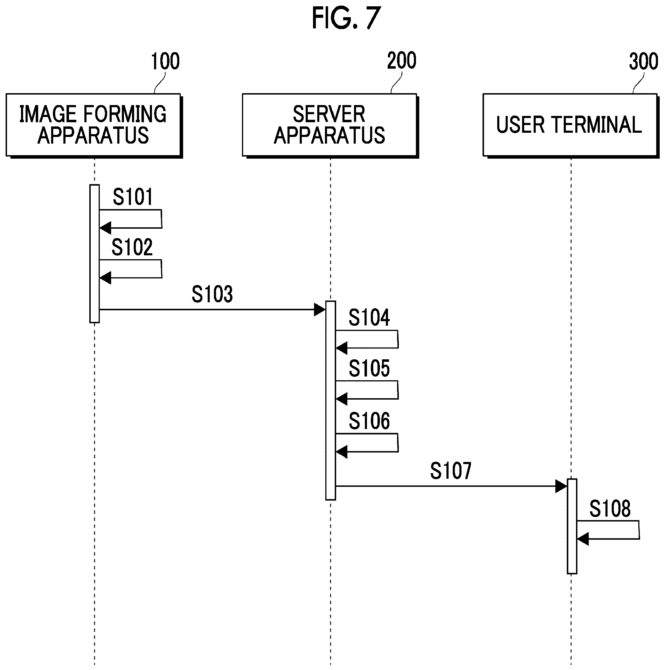

Fig. 7 is a sequence diagram illustrating a flow until a diagnosis result of the image diagnosis system 1 according to Exemplary Embodiment 1 is output.

In Exemplary Embodiment 1, user information is specified from contract information on the image forming apparatus 100. Here, a case where a user who has made a purchase contract or the like is, for example, the trained user 102 will be described as an example. Therefore, information on the trained user 102 is added to the image forming apparatus 100 as the user information.

The image forming apparatus 100 forms the chart image 61 on the paper P by an operation of the user (S101). Thus, the chart paper CP is generated. Next, in a case where the chart paper CP is placed in the image scanning device 130 by the user and is scanned, scan image data of the chart image 61 is generated (S102). The scan image data is transmitted to the server apparatus 200 by the operation of the user. In addition, here, the user information on the trained user 102 specified by the contract information on the image forming apparatus 100 is transmitted to the server apparatus 200, together with the scan image data (S103).

The server apparatus 200 acquires the scan image data and the user information. Next, the server apparatus 200 performs diagnosis on the image forming apparatus 100 based on the scan image data (S104). The server apparatus 200 generates a diagnosis result of the image forming apparatus 100 (S105). The server apparatus 200 generates a display screen of the diagnosis result of the image forming apparatus 100 based on the generated diagnosis result and the user information (S106). In a case where the user accesses the server apparatus 200 from the user terminal 300 by the operation of the user, the server apparatus 200 outputs the display screen of the diagnosis result of the image forming apparatus 100 generated in S106 (S107).

The display screen (described below) of the diagnosis result of the image forming apparatus 100 generated for the trained user 102 is displayed on the display device 310 (see Fig. 1) of the user terminal 300 (S108). Thus, the user grasps the diagnosis result of the image forming apparatus 100.

### <Exemplary Embodiment 2>

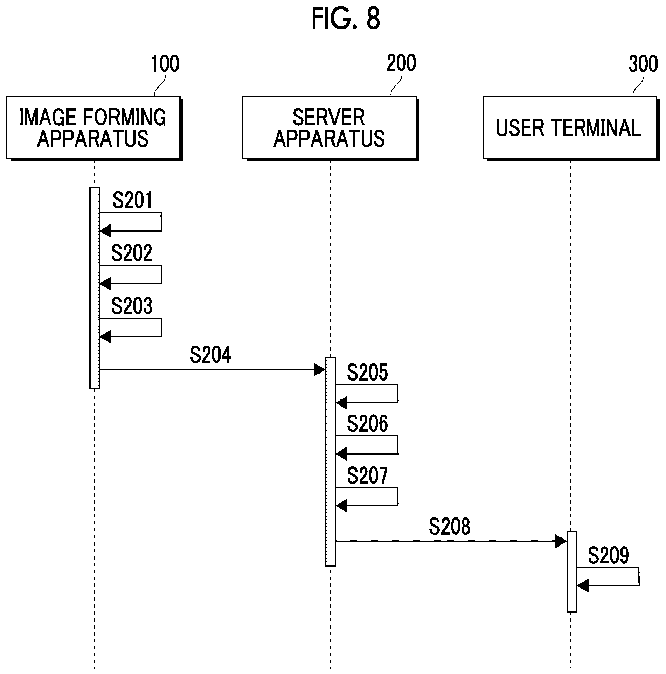

Fig. 8 is a sequence diagram illustrating a flow until a diagnosis result of the image diagnosis system 1 according to Exemplary Embodiment 2 is output.

In Exemplary Embodiment 2, contract information on the image forming apparatus 100 is not used. Here, user information is specified from login information to the image forming apparatus 100. Here, for example, a case where the machine management user 103 uses a diagnosis result of the image forming apparatus 100 will be described as an example.

A user who performs diagnosis on the image forming apparatus 100 displays a setting screen (see Fig. 5B) on the operation reception unit 132, inputs a customer management number and a password assigned to the user, and logs in to the image forming apparatus 100. Here, the machine management user 103 inputs the customer management number and the password assigned to the machine management user 103 and logs in.

The image forming apparatus 100 specifies the user information as the machine management user 103 based on the login information (S201). The image forming apparatus 100 forms the chart image 61 on the paper P by an operation of the user (S202). Thus, the chart paper CP is generated. Next, in a case where the chart paper CP is placed in the image scanning device 130 by the user and is scanned, scan image data of the chart image 61 is generated (S203). The scan image data is transmitted to the server apparatus 200 by the operation of the user. In addition, here, the user information on the machine management user 103 specified from the login information to the image forming apparatus 100 is transmitted to the server apparatus 200, together with the scan image data (S204).

The server apparatus 200 receives the scan image data and the user information. Next, the server apparatus 200 performs diagnosis on the image forming apparatus 100 based on the scan image data (S205). The server apparatus 200 generates a diagnosis result of the image forming apparatus 100 (S206). The server apparatus 200 generates a display screen of the diagnosis result of the image forming apparatus 100 based on the generated diagnosis result and the user information (S207). In a case where the user accesses the server apparatus 200 from the user terminal 300 by the operation of the user, the server apparatus 200 outputs the display screen of the diagnosis result of the image forming apparatus 100 generated in S207 (S208).

The display screen of the diagnosis result of the image forming apparatus 100 generated for the machine management user 103 is displayed on the display device 310 (see Fig. 1) of the user terminal 300 (S209).

Thus, the user grasps the diagnosis result of the image forming apparatus 100.

### <Exemplary Embodiment 3>

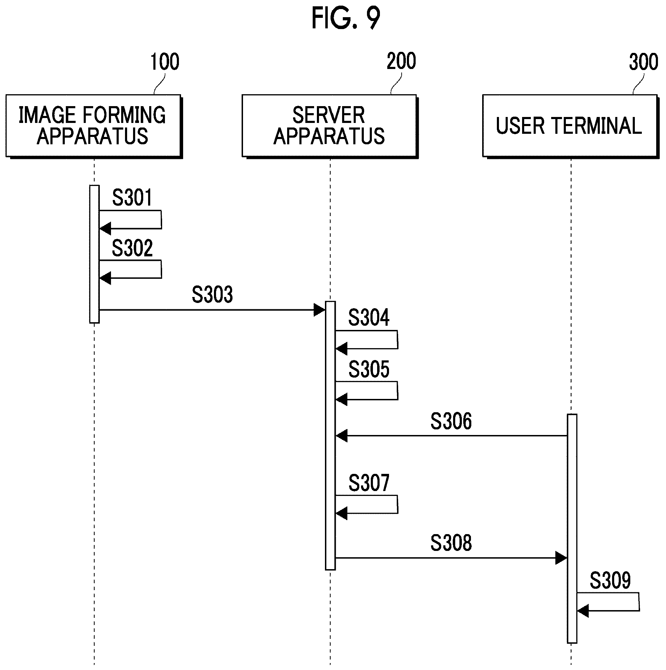

Fig. 9 is a sequence diagram illustrating a flow until a diagnosis result of the image diagnosis system 1 according to Exemplary Embodiment 3 is output.

In Exemplary Embodiment 3, user information is specified from login information to the user terminal 300 used by a user to check a diagnosis result. Here, a case where the user information specified from the login information to the user terminal 300 is the general user 104 will be described as an example.

The image forming apparatus 100 forms the chart image 61 on the paper P by an operation of the user (S301). Thus, the chart paper CP is generated. Next, in a case where the chart paper CP is placed in the image scanning device 130 by the user and is scanned, scan image data of the chart image 61 is generated (S302). The scan image data is transmitted to the server apparatus 200 by the operation of the user (S303).

The server apparatus 200 receives the scan image data. Next, the server apparatus 200 diagnoses the image forming apparatus 100 based on the scan image data (S304). The server apparatus 200 generates a diagnosis result of the image forming apparatus 100, and enters a standby state (S305).

The general user 104 accesses a diagnosis result login screen (see Fig. 6) provided by the server apparatus 200 from the user terminal 300 that is a terminal of the general user 104, and inputs login information. Thus, user information specified from the login information is transmitted to the server apparatus 200 (S306). Here, the user information is specified as the general user 104 from the user ID, and the specified user information is transmitted to the server apparatus 200.

The server apparatus 200 generates a display screen of the diagnosis result of the image forming apparatus 100 based on the generated diagnosis result and the acquired user information (S307). The server apparatus 200 outputs the generated display screen of the diagnosis result of the image forming apparatus 100 to the user terminal 300 (S308).

In the above description, the server apparatus 200 is in a standby state until the user information is transmitted to the server apparatus 200 in S306. On the other hand, the user information may be acquired before the diagnosis result of the image forming apparatus 100 is generated in S305. The user information is stored in the server apparatus 200, and is used in a case where the display screen of the diagnosis result is generated. A case where the user information is acquired in advance is, for example, a case where the user accesses a screen for checking the diagnosis result and logs in while the image forming apparatus 100 is being diagnosed.

The display screen of the diagnosis result of the image forming apparatus 100 generated for the general user 104 is displayed on the display device 310 (see Fig. 1) of the user terminal 300 (S309). Thus, the general user 104 grasps the diagnosis result of the image forming apparatus 100.

In Exemplary Embodiments 1 to 3 described above, the process of displaying the display screen generated by the server apparatus 200 on the display device 310 of the user terminal 300 is described, and the present disclosure is not limited thereto. The display screen generated by the server apparatus 200 may be output to a device having a printing function, such as the image forming apparatus 100 (see Fig. 1). That is, the display screen generated by the server apparatus 200 may be displayed on the operation reception unit 132 (refer to Fig. 1) of the image forming apparatus 100.

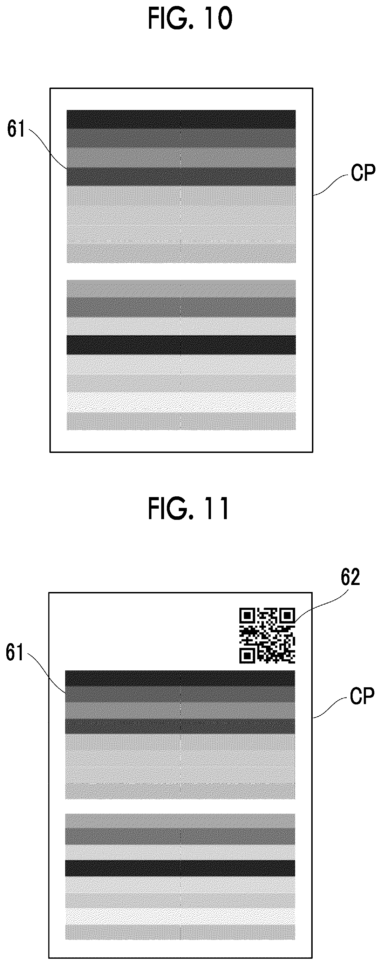

Fig. 10 is a diagram illustrating an example of the chart paper CP.

The chart paper CP used in Exemplary Embodiments 1 to 3 described above will be described.

The chart image 61 as information for diagnosing the image forming apparatus 100 is formed on the chart paper CP.

The chart image 61 is formed on paper of the image forming apparatus 100 as a diagnosis target, for example, to evaluate failure parts or the like.

The server apparatus 200 diagnoses the image forming apparatus 100 by analyzing the scan image data based on the chart image 61, and specifies the failure parts or the like.

### <Modification Example>

Next, a modification example of a method of acquiring a diagnosis result of the image forming apparatus 100 will be described.

In this modification example, the method of acquiring the diagnosis result is different from Exemplary Embodiments 1 to 3 described above.

In order to realize this modification example, the image forming apparatus 100 stores access information to a check screen of a diagnosis result provided by the server apparatus 200 in a secondary storage unit or the like. In addition, the image forming apparatus 100 stores information on the image forming apparatus 100 itself in the secondary storage unit or the like. In addition, the image forming apparatus 100 acquires user information from contract information on the image forming apparatus 100 or login information to the image forming apparatus 100, and stores the user information in the secondary storage unit or the like.

In a case of diagnosing the image forming apparatus 100, the image forming apparatus 100 adds the information described above to the paper P. The information described above is access information to the check screen of the diagnosis result, information on the image forming apparatus 100 itself, and the user information. The information described above can be formed on the paper P in a form of being included in a QR code 62 (registered trademark) (see Fig. 11) as an example of identification information.

The image forming apparatus 100 forms the chart image 61 and the QR code 62 to which the information is added on the paper P by an operation of a user. Thus, the chart paper CP on which the chart image 61 and the QR code 62 are formed is generated.

Scan image data based on the chart paper CP is transmitted to the server apparatus 200 by the operation of the user, and is used for diagnosing the image forming apparatus 100. The server apparatus 200 generates a diagnosis result, and enters a standby state.

After a series of processes are finished, the user reads the QR code 62 formed on the chart paper CP, by using the user terminal 300. The server apparatus 200 outputs the diagnosis result of the image forming apparatus 100 generated based on the user information to the user terminal 300 accessed by using the QR code 62. The user refers to the display device 310 (see Fig. 1) of the user terminal 300 to grasp the diagnosis result of the image forming apparatus 100.

Fig. 11 is a diagram illustrating another example of the chart paper CP.

Fig. 11 illustrates the chart paper CP used in the modification example. On the chart paper CP, the chart image 61 and the QR code 62 as an example of identification information are formed. In this modification example, in a case where the user reads the QR code 62 formed on the chart paper CP by using the user terminal 300, the diagnosis result for the user is displayed on the user terminal 300. Thus, it is possible to reduce the number of works for accessing the server apparatus 200, the login work, and the like.

### <Display Screen Corresponding to User Information>

Next, a display screen of a diagnosis result of the image forming apparatus 100 output by the server apparatus 200 will be described.

As described above, the server apparatus 200 generates a display screen of a diagnosis result of the image forming apparatus 100 based on the diagnosis result from diagnosis information on the image forming apparatus 100 and user information. More specifically, the server apparatus 200 generates the display screen of the diagnosis result of the image forming apparatus 100 in accordance with a level of a maintenance technology of a user for the image forming apparatus 100. In the example illustrated in Fig. 4, the maintenance engineer 101, the trained user 102, the machine management user 103, and the general user 104 are illustrated in order of the high maintenance technology of the image forming apparatus 100. The display screen of the diagnosis result output in response to each user information in a case where diagnosis of one image forming apparatus 100 is performed will be described below.

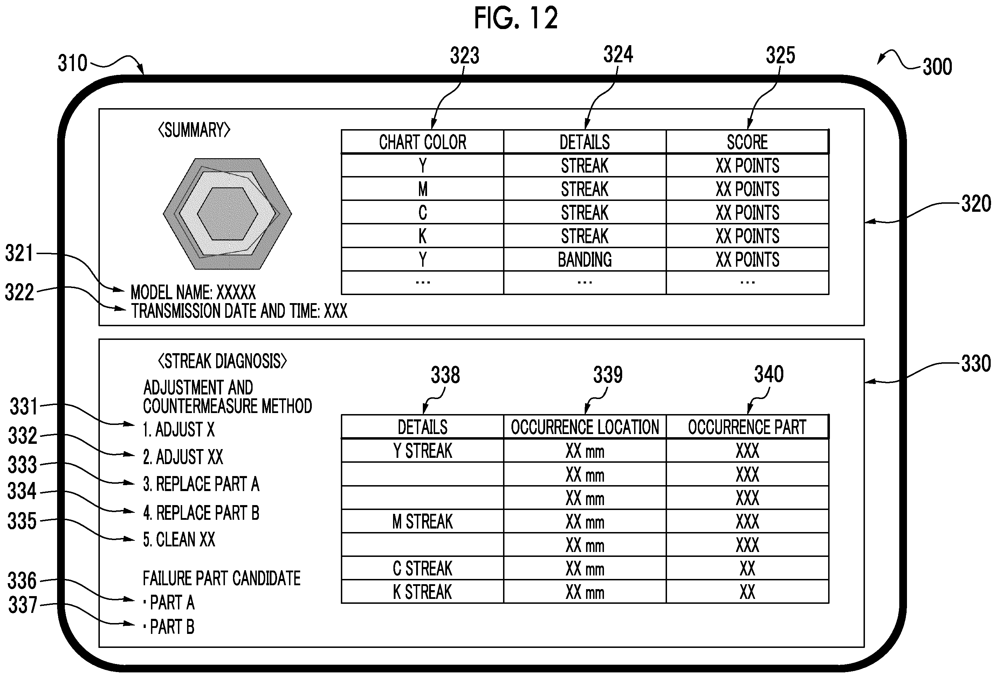

Fig. 12 is a diagram illustrating an example of a display screen of a diagnosis result output for the maintenance engineer 101.

Fig. 12 illustrates the display device 310 of the user terminal 300. Further, the display screen of the diagnosis result for the maintenance engineer 101, which is output by the server apparatus 200, is illustrated on the display device 310.

In the example of the display screen illustrated in Fig. 12, a summary is displayed in a first display field 320. The summary indicates an outline of the diagnosis result of the image forming apparatus 100. In addition, a model name 321 of the image forming apparatus 100 on which diagnosis is performed and a transmission date and time 322 are displayed in the first display field 320. In addition, a chart color field 323, a detail field 324, and a score field 325 are displayed in the first display field 320. In the chart color 323, Y (yellow), M (magenta), C (cyan), K (black), and the like are displayed. In addition, details such as occurrence of streaks or banding, for example, depending on each chart color are displayed in the detail field 324. In addition, a score in the diagnosis is displayed in the score field 325.

In the example of the display screen illustrated in Fig. 12, a detail field 338, an occurrence location field 339, and an occurrence parts field 340 are displayed in a second display field 330. In the detail field 338, a Y streak, an M streak, a C streak, a K streak, and the like are displayed. In addition, an occurrence location and the like in each streak are displayed in the occurrence location field 339. In addition, failure parts and the like are displayed in the occurrence parts field 340.

In addition, the diagnosis result is displayed in the second display field 330. Here, streak diagnosis and the like are illustrated. An adjustment and countermeasure method is illustrated based on the diagnosis result. For example, "1. adjust X" is displayed in a display field 331. In addition, "2. adjust XX" is displayed in a display field 332. In addition, "3. replace part A" is displayed in a display field 333. In addition, "4. replace part B" is displayed in a display field 334. In addition, "5. clean XX" is displayed in a display field 335. In addition, under the display field 335, failure part candidates are illustrated based on the diagnosis result. Then, "part A" is displayed in a display field 336. In addition, "part B" is displayed in a display field 337.

The maintenance engineer 101 is a user having a high maintenance technology for the image forming apparatus 100. Therefore, here, all the diagnosis results related to the image forming apparatus 100 are displayed. This includes displaying a work content including professional work, dangerous work, or the like, replacement parts, and the like for the maintenance engineer 101. In addition, the work content, the replacement parts, or the like may be displayed by using a technical term. The maintenance engineer 101 performs maintenance of the image forming apparatus 100 with reference to this display screen.

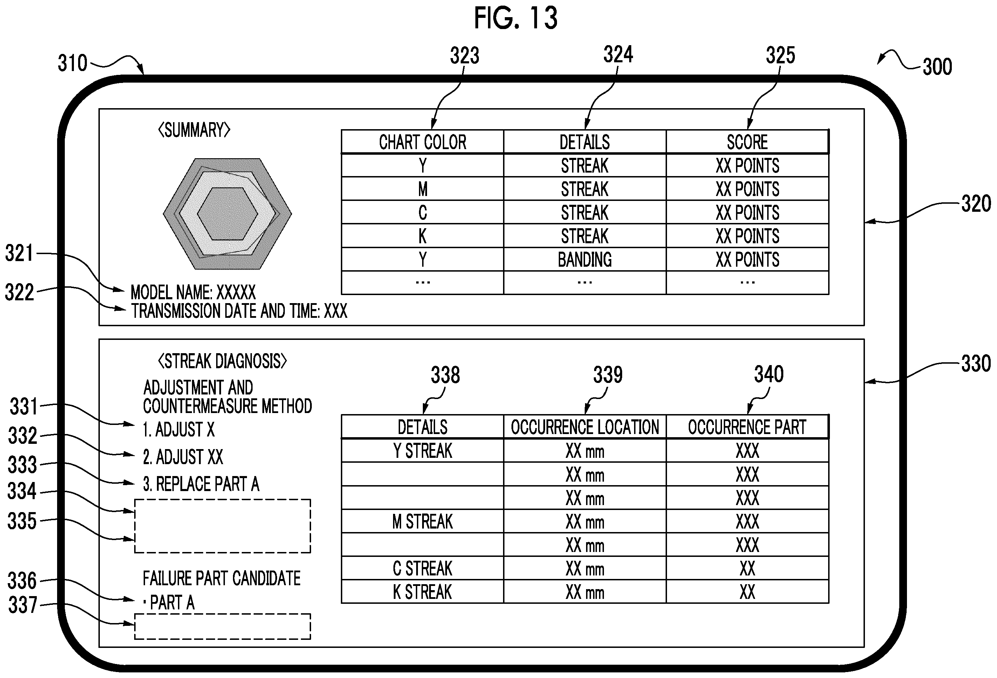

Fig. 13 is a diagram illustrating an example of a display screen of a diagnosis result output for the trained user 102.

The display screen of the diagnosis result for the trained user 102 output by the server apparatus 200 is illustrated on the display device 310.

In Fig. 13, the display contents for the display field 334, the display field 335, and the display field 337 are hidden, as compared with Fig. 12. That is, in Fig. 13, the display contents of "4. replace part B" illustrated in the display field 334, "5. clean XX" illustrated in the display field 335, and "part B" illustrated in the display field 337 of Fig. 12 are hidden. The trained user 102 has a certain knowledge about maintenance of the image forming apparatus 100. Meanwhile, in some cases, the trained user 102 cannot handle specialized work which is performed by the maintenance engineer 101 or replacement parts for the maintenance engineer 101. Here, adjustment work or the like that can be handled by the trained user 102 is displayed.

For example, an item related to "replacement of part B" or "cleaning of XX" as an example of the specialized work performed by the maintenance engineer 101 is hidden, and the diagnosis result is displayed. In addition, for example, an item related to "part B" as an example of a replacement part for the maintenance engineer 101 is hidden, and the diagnosis result is displayed. The trained user 102 performs the maintenance of the image forming apparatus 100 with reference to this display screen.

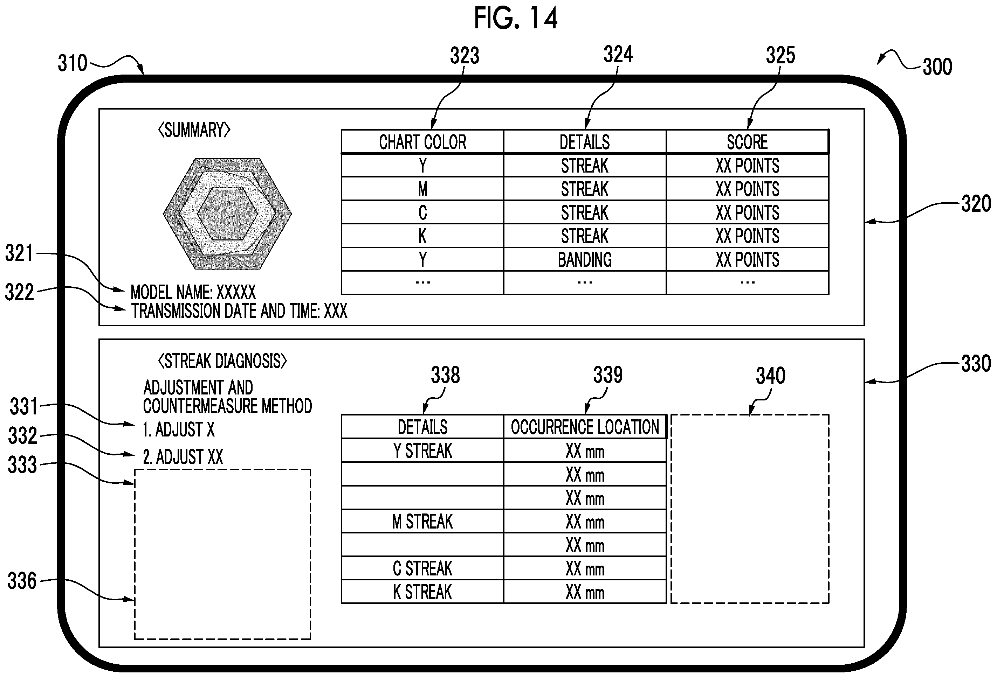

Fig. 14 is a diagram illustrating an example of a display screen of the diagnosis result output for the machine management user 103.

The display screen of the diagnosis result for the machine management user 103, which is output by the server apparatus 200, is illustrated on the display device 310.

In Fig. 14, the display contents of the display field 333, the display field 336, and the occurrence parts field 340 are hidden, as compared with Fig. 13. That is, in Fig. 14, the display contents about "3. replace part A" illustrated in the display field 333 and "part A" illustrated in the display field 336 of Fig. 13 are hidden. The machine management user 103 is a user having a low maintenance technology as compared with the trained user 102, and can perform simple adjustment work, and cannot handle parts replacement or the like, in some cases. Here, the adjustment work or the like that can be handled by the machine management user 103 is displayed.

For example, the contents related to the parts replacement illustrated in the display field 333 and the display field 336 or the occurrence parts field 340 is hidden, and the diagnosis result is displayed. The machine management user 103 performs maintenance of the image forming apparatus 100 with reference to the display screen.

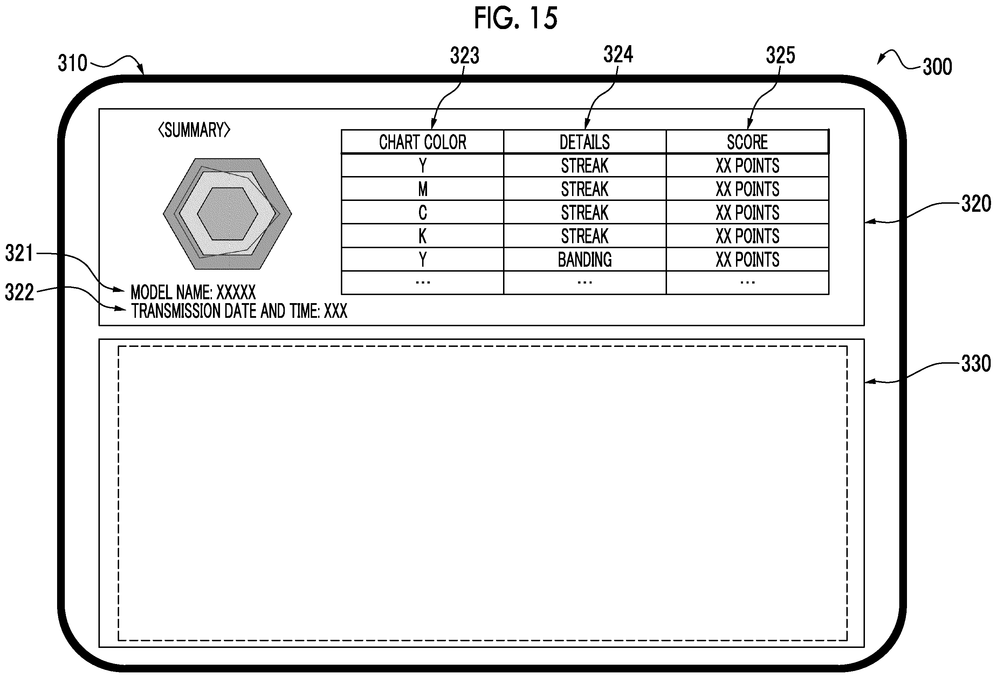

Fig. 15 is a diagram illustrating an example of a display screen of a diagnosis result output for the general user 104.

The display screen of the diagnosis result for the general user 104, which is output by the server apparatus 200, is illustrated on the display device 310. In Fig. 15, only the first display field 320 is displayed, and the work content and the replacement part related to the maintenance inspection are not displayed. Since the general user 104 does not have a knowledge about maintenance, the general user 104 does not generally perform the maintenance of the image forming apparatus 100 by the general user 104. The general user 104 refers to the summary, and requests a maintenance inspection to the maintenance engineer 101 or the like with the display content of the summary.

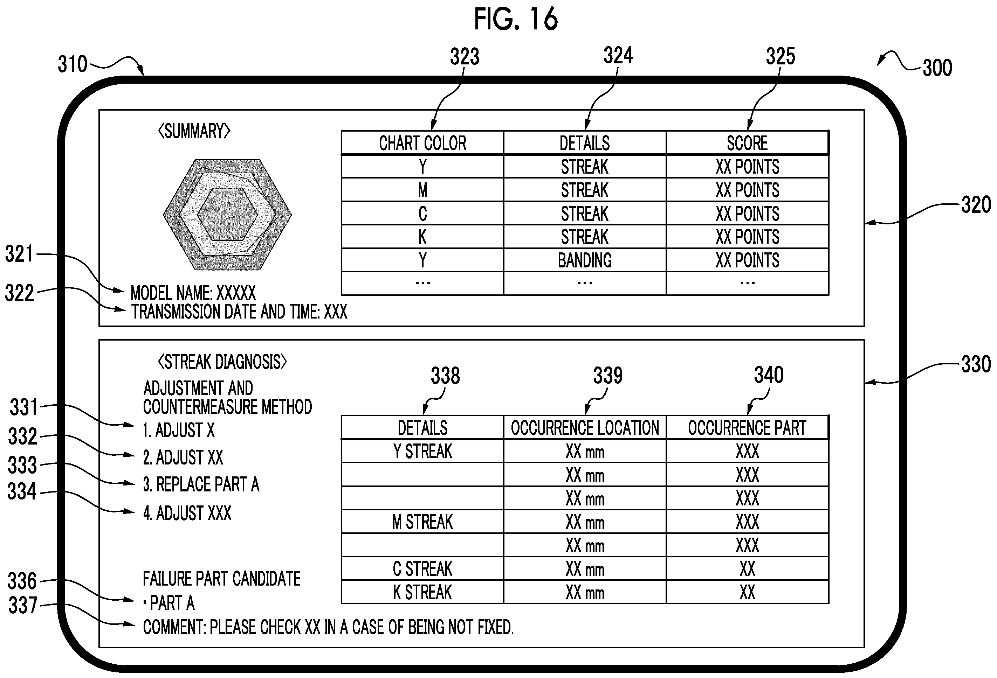

Fig. 16 is a diagram illustrating an example of a display screen of a diagnosis result generated to include a knowledge of the maintenance engineer 101.

The display screen of the diagnosis result generated to include the knowledge of the maintenance engineer 101 is displayed on the display device 310. This display screen can also be referred to by other maintenance engineers 101, in addition to the trained user 102, the machine management user 103, and the general user 104 described above.

In a case where the display screen of the diagnosis result includes the knowledge of the maintenance engineer 101, for example, the diagnosis result by the server apparatus 200 is transmitted to a terminal of the maintenance engineer 101, and the maintenance engineer 101 needs to input an instruction or the like. After diagnosis of the image forming apparatus 100 by the server apparatus 200, the maintenance engineer 101 checks the diagnosis result. The maintenance engineer 101 considers, for example, displaying a necessary countermeasure method and deleting an unnecessary countermeasure method for the diagnosis result. In addition, the maintenance engineer 101 considers selecting the countermeasure method or rearranging a priority of the countermeasure method. In addition, the maintenance engineer 101 examines a countermeasure method unique to the image forming apparatus 100. The maintenance engineer 101 reflects a knowledge of the maintenance engineer 101 for the contents of the examination on the diagnosis result. The maintenance engineer 101 may give an instruction to a user by inputting a comment. Thus, the diagnosis result including the knowledge of the maintenance engineer 101 is generated. The maintenance engineer 101 returns the diagnosis result including the knowledge of the maintenance engineer 101 to the server apparatus 200 or any user terminal 300. The diagnosis result is provided to the user.

In the diagram illustrated in Fig. 16, for example, in the display field 334, "adjust XXX" is described as an adjustment method based on the knowledge of the maintenance engineer 101. In addition, "comment: please check XX in a case of being not fixed." is described in the display field 337 illustrated in Fig. 16. In this manner, by displaying the diagnosis result generated to include the knowledge of the maintenance engineer 101, it is possible to perform the maintenance of the image forming apparatus 100 under the instruction of the maintenance engineer 101.

Although the present exemplary embodiments are described, a technical scope of the present exemplary embodiment of the invention is not limited to the exemplary embodiments. In the example described above, the display contents related to the maintenance inspection, for example, the display contents of the replacement parts and the work contents are displayed to be different from each other based on the user information, and the present disclosure is not limited thereto. For example, the representation of the term used for the description in the case of performing the maintenance may be displayed in a different manner based on the user information. In this manner, even a user who does not have a specialized knowledge can easily understand the description of the maintenance. In addition, in a case of displaying the description of the work content, a drawing, a moving image, or the like indicating the content of the work may be displayed. In addition, various modifications and alternative configurations are involved in the present invention without departing from the technical scope of the present invention.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the appended claims.

### Brief Description of the Reference Symbols

100: image forming apparatus
200: server apparatus
300: user terminal
101: maintenance engineer
102: trained user
103: machine management user
104: general user
130: image scanning device
132: operation reception unit
310: display device

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

### Brief Description of the Reference Symbols

100: image forming apparatus
200: server apparatus
300: user terminal
101: maintenance engineer
102: trained user
103: machine management user
104: general user
130: image scanning device
132: operation reception unit
310: display device

## Claims

1. An image diagnosis system (1) comprising:
one or a plurality of processors (11a) configured to:
acquire diagnosis information used for diagnosing an image forming apparatus (100);
acquire user information related to a user who uses the diagnosis from the diagnosis information; and
output a diagnosis result for the user based on the acquired diagnosis information and the acquired user information,
being **characterized in that**:
the diagnosis information is acquired by reading a chart in which a diagnosis image is formed; and
identification information generated based on the acquired user information is formed in the chart.

2. The image diagnosis system according to claim 1,
wherein the user information is acquired from contract information on the image forming apparatus or login information to the image forming apparatus by the user.

3. The image diagnosis system according to claim 1 or 2,
wherein the user information is classification information obtained by classifying the user.

4. The image diagnosis system according to claim 1 or 3,
wherein the user information is acquired in a case where the user checks the diagnosis result of the image forming apparatus.

5. The image diagnosis system according to claim 3 or 4,
wherein the user information is acquired from login information to another terminal other than the image forming apparatus, which is used in a case where the user checks the diagnosis result of the image forming apparatus.

6. The image diagnosis system according to claim 1,
wherein the identification information is read, and the diagnosis result based on the user information is output to a terminal accessed by using the identification information.

7. The image diagnosis system according to any one of claims 1 to 6,
wherein the diagnosis result is output such that a display content related to a maintenance inspection for the image forming apparatus is made differently in accordance with the user information.

8. The image diagnosis system according to claim 7,
wherein the display content related to the maintenance inspection is a display content related to a replacement part and/or a work content of the image forming apparatus.

9. The image diagnosis system according to claim 7 or 8,
wherein for the display content related to the maintenance inspection, a term used for description is represented in a different manner.

10. The image diagnosis system according to any one of claims 1 to 9,
wherein the diagnosis result is generated to include a knowledge of a maintenance technician who performs maintenance on the image forming apparatus.

11. The image diagnosis system according to any one of claims 1 to 10,
wherein the diagnosis result is generated to include at least one knowledge of a maintenance technician of displaying a necessary countermeasure method, deleting an unnecessary countermeasure method, selecting rearrangement by a priority of the countermeasure methods, or a countermeasure method unique to the image forming apparatus.

12. A program comprising instructions which when executed on a computer, cause said computer to realize: :
a function of acquiring diagnosis information used for diagnosing an image forming apparatus (100);
a function of acquiring user information related to a user who uses the diagnosis from the diagnosis information; and
a function of outputting a diagnosis result for the user based on the acquired diagnosis information and the acquired user information,
the program being **characterized by** causing the computer to further realize:
a function of acquiring the diagnosis information by reading a chart in which a diagnosis image is formed; and
a function of generating identification information based on the acquired user information is formed in the chart.

13. An image diagnosis method comprising:
acquiring diagnosis information used for diagnosing an image forming apparatus;
acquiring user information related to a user who uses the diagnosis from the diagnosis information; and
outputting a diagnosis result for the user based on the acquired diagnosis information and the acquired user information,
the image diagnosis method being **characterized by** further comprising:
acquiring the diagnosis information by reading a chart in which a diagnosis image is formed; and
generating identification information based on the acquired user information is formed in the chart.

## Patentansprüche

1. Bilddiagnosesystem (1), umfassend:
einen oder mehrere Prozessoren (11a), die so konfiguriert sind, dass sie:
Diagnoseinformationen, die zum Diagnostizieren einer Bilderzeugungsvorrichtung (100) verwendet werden, erfassen;
Benutzerinformationen, die sich auf einen Benutzer beziehen, der die Diagnose verwendet, aus den Diagnoseinformationen erfassen; und
ein Diagnoseergebnis für den Benutzer auf der Grundlage der erfassten Diagnoseinformationen und der erfassten Benutzerinformationen ausgeben,
**dadurch gekennzeichnet, dass**:
die Diagnoseinformationen durch Lesen eines Charts, in dem ein Diagnosebild gebildet ist, erfasst werden; und
Identifikationsinformationen, die auf der Grundlage der erfassten Benutzerinformationen erzeugt werden, in dem Chart gebildet sind.

2. Bilddiagnosesystem nach Anspruch 1,
wobei die Benutzerinformationen aus Vertragsinformationen über die Bilderzeugungsvorrichtung oder Anmeldeinformationen für die Bilderzeugungsvorrichtung von dem Benutzer erfasst werden.

3. Bilddiagnosesystem nach Anspruch 1 oder 2,
wobei die Benutzerinformationen Klassifizierungsinformationen sind, die durch Klassifizieren des Benutzers erhalten werden.

4. Bilddiagnosesystem nach Anspruch 1 oder 3,
wobei die Benutzerinformationen in einem Fall erfasst werden, in dem der Benutzer das Diagnoseergebnis der Bilderzeugungsvorrichtung überprüft.

5. Bilddiagnosesystem nach Anspruch 3 oder 4,
wobei die Benutzerinformationen aus Anmeldeinformationen für ein anderes Terminal als die Bilderzeugungsvorrichtung, das in einem Fall verwendet wird, in dem der Benutzer das Diagnoseergebnis der Bilderzeugungsvorrichtung überprüft, erfasst werden.

6. Bilddiagnosesystem nach Anspruch 1,
wobei die Identifikationsinformationen gelesen werden und das Diagnoseergebnis auf der Grundlage der Benutzerinformationen an ein Terminal ausgegeben wird, auf das durch Verwenden der Identifikationsinformationen zugegriffen wird.

7. Bilddiagnosesystem nach einem der Ansprüche 1 bis 6,
wobei das Diagnoseergebnis so ausgegeben wird, dass ein Anzeigeinhalt, der sich auf eine Wartungsinspektion für die Bilderzeugungsvorrichtung bezieht, in Übereinstimmung mit den Benutzerinformationen unterschiedlich gemacht wird.

8. Bilddiagnosesystem nach Anspruch 7,
wobei der Anzeigeinhalt, der sich auf die Wartungsinspektion bezieht, ein Anzeigeinhalt ist, der sich auf ein Ersatzteil und/oder einen Arbeitsinhalt der Bilderzeugungsvorrichtung bezieht.

9. Bilddiagnosesystem nach Anspruch 7 oder 8,
wobei für den Anzeigeinhalt, der sich auf die Wartungsinspektion bezieht, ein Begriff, der zur Beschreibung verwendet wird, auf eine unterschiedliche Weise dargestellt wird.

10. Bilddiagnosesystem nach einem der Ansprüche 1 bis 9,
wobei das Diagnoseergebnis so erzeugt wird, dass es ein Wissen eines Wartungstechnikers, der Wartung an der Bilderzeugungsvorrichtung durchführt, enthält.

11. Bilddiagnosesystem nach einem der Ansprüche 1 bis 10,
wobei das Diagnoseergebnis so erzeugt wird, dass es mindestens ein Wissen eines Wartungstechnikers des Anzeigens eines notwendigen Gegenmaßnahmenverfahrens, des Löschens eines unnötigen Gegenmaßnahmenverfahrens, des Auswählens von Umordnung durch eine Priorität der Gegenmaßnahmenverfahren oder eines Gegenmaßnahmenverfahrens, das für die Bilderzeugungsvorrichtung einzigartig ist, enthält.

12. Programm, das Anweisungen umfasst, die, wenn sie auf einem Computer ausgeführt werden, den Computer veranlassen zu realisieren:
eine Funktion des Erfassens von Diagnoseinformationen, die zum Diagnostizieren einer Bilderzeugungsvorrichtung (100) verwendet werden;
eine Funktion des Erfassens von Benutzerinformationen, die sich auf einen Benutzer, der die Diagnose verwendet, beziehen, aus den Diagnoseinformationen; und
eine Funktion des Ausgebens eines Diagnoseergebnisses für den Benutzer auf der Grundlage der erfassten Diagnoseinformationen und der erfassten Benutzerinformationen,
wobei das Programm **dadurch gekennzeichnet ist, dass** es den Computer veranlasst, ferner zu realisieren:
eine Funktion des Erfassens der Diagnoseinformationen durch Lesen eines Charts, in dem ein Diagnosebild gebildet ist; und
eine Funktion des Erzeugens von Identifikationsinformationen auf der Grundlage der erfassten Benutzerinformationen in dem Chart gebildet wird.

13. Bilddiagnoseverfahren, umfassend:
Erfassen von Diagnoseinformationen, die zum Diagnostizieren einer Bilderzeugungsvorrichtung verwendet werden;
Erfassen von Benutzerinformationen, die sich auf einen Benutzer, der die Diagnose verwendet, beziehen, aus den Diagnoseinformationen; und
Ausgeben eines Diagnoseergebnisses für den Benutzer auf der Grundlage der erfassten Diagnoseinformationen und der erfassten Benutzerinformationen,
wobei das Bilddiagnoseverfahren **dadurch gekennzeichnet ist, dass** es ferner umfasst:
Erfassen der Diagnoseinformationen durch Lesen eines Charts, in dem ein Diagnosebild gebildet ist; und
Erzeugen von Identifikationsinformationen auf der Grundlage der erfassten Benutzerinformationen in dem Chart gebildet wird.

## Revendications

1. Système de diagnostic d'images (1) comprenant :
un ou une pluralité de processeurs (11a) configurés pour :
acquérir des informations de diagnostic utilisées pour diagnostiquer un appareil de formation d'images (100) ;
acquérir des informations utilisateur relatives à un utilisateur qui utilise le diagnostic à partir des informations de diagnostic ; et
fournir un résultat de diagnostic pour l'utilisateur sur la base des informations de diagnostic acquises et des informations utilisateur acquises,
étant **caractérisé en ce que** :
les informations de diagnostic sont acquises en lisant une mire dans laquelle une image de diagnostic est formée ; et
des informations d'identification générées sur la base des informations utilisateur acquises sont formées dans la mire.

2. Système de diagnostic d'images selon la revendication 1,
dans lequel les informations utilisateur sont acquises à partir d'informations de contrat sur l'appareil de formation d'images ou d'informations de connexion à l'appareil de formation d'images par l'utilisateur.

3. Système de diagnostic d'images selon la revendication 1 ou la revendication 2,
dans lequel les informations utilisateur sont des informations de classification obtenues en classant l'utilisateur.

4. Système de diagnostic d'images selon la revendication 1 ou la revendication 3,
dans lequel les informations utilisateur sont acquises dans un cas où l'utilisateur consulte le résultat de diagnostic de l'appareil de formation d'images.

5. Système de diagnostic d'images selon la revendication 3 ou la revendication 4,
dans lequel les informations utilisateur sont acquises à partir d'informations de connexion à un autre terminal que l'appareil de formation d'images, qui est utilisé dans un cas où l'utilisateur consulte le résultat de diagnostic de l'appareil de formation d'images.

6. Système de diagnostic d'images selon la revendication 1,
dans lequel les informations d'identification sont lues, et le résultat de diagnostic basé sur les informations utilisateur est fourni à un terminal accédé en utilisant les informations d'identification.

7. Système de diagnostic d'images selon l'une quelconque des revendications 1 à 6,
dans lequel le résultat de diagnostic est fourni de sorte qu'un contenu d'affichage relatif à une inspection de maintenance pour l'appareil de formation d'images est présenté différemment en fonction des informations utilisateur.

8. Système de diagnostic d'images selon la revendication 7,
dans lequel le contenu d'affichage relatif à l'inspection de maintenance est un contenu d'affichage relatif à une pièce de rechange et/ou à un contenu de travail de l'appareil de formation d'images.

9. Système de diagnostic d'images selon la revendication 7 ou la revendication 8,
dans lequel pour le contenu d'affichage relatif à l'inspection de maintenance, un terme utilisé pour la description est représenté de manière différente.

10. Système de diagnostic d'images selon l'une quelconque des revendications 1 à 9,
dans lequel le résultat de diagnostic est généré de manière à inclure une connaissance d'un technicien de maintenance qui effectue la maintenance de l'appareil de formation d'images.

11. Système de diagnostic d'images selon l'une quelconque des revendications 1 à 10,
dans lequel le résultat de diagnostic est généré de manière à inclure au moins une connaissance d'un technicien de maintenance consistant à afficher une méthode de contre-mesure nécessaire, à supprimer une méthode de contre-mesure inutile, à sélectionner un réarrangement selon une priorité des méthodes de contre-mesure, ou une méthode de contre-mesure propre à l'appareil de formation d'images.

12. Programme comprenant des instructions qui, lorsqu'elles sont exécutées sur un ordinateur, amènent ledit ordinateur à réaliser :
une fonction consistant à acquérir des informations de diagnostic utilisées pour diagnostiquer un appareil de formation d'images (100) ;
une fonction consistant à acquérir des informations utilisateur relatives à un utilisateur qui utilise le diagnostic à partir des informations de diagnostic ; et
une fonction consistant à fournir un résultat de diagnostic pour l'utilisateur sur la base des informations de diagnostic acquises et des informations utilisateur acquises,
le programme étant **caractérisé par le fait qu'**il amène l'ordinateur à réaliser en outre :
une fonction consistant à acquérir les informations de diagnostic en lisant une mire dans laquelle une image de diagnostic est formée ; et
une fonction consistant à générer des informations d'identification sur la base des informations utilisateur acquises sont formées dans la mire.

13. Procédé de diagnostic d'images comprenant :
acquérir des informations de diagnostic utilisées pour diagnostiquer un appareil de formation d'images ;
acquérir des informations utilisateur relatives à un utilisateur qui utilise le diagnostic à partir des informations de diagnostic ; et
fournir un résultat de diagnostic pour l'utilisateur sur la base des informations de diagnostic acquises et des informations utilisateur acquises,
le procédé de diagnostic d'images étant **caractérisé en ce qu'**il comprend en outre :
acquérir les informations de diagnostic en lisant une mire dans laquelle une image de diagnostic est formée ; et
générer des informations d'identification sur la base des informations utilisateur acquises sont formées dans la mire.
